Europäisches Patentamt

European Patent Office

Office européen des brevets

(19)

(11) Publication number:

**0 222 920**
**A1**

(12)

# EUROPEAN PATENT APPLICATION

published in accordance with Art. 158(3) EPC

(21) Application number: **86902910.8**

(22) Date of filing: **08.05.86**

Data of the international application taken as a basis:

(86) International application number:
**PCT/JP 86/00238**

(87) International publication number:
**WO 86/06912 (20.11.86 86/25)**

(51) Int. Cl.⁴: **H 04 N 7/173, H 04 M 11/06**

(30) Priority: **08.05.85 JP 96075/85**

(43) Date of publication of application: **27.05.87**
**Bulletin 87/22**

(84) Designated Contracting States: **CH DE FR GB IT LI NL**

(71) Applicant: **KABUSHIKIKAISHA AI ESU ESU, 21-12, Yoyogi 1-chome, Shibuya-ku Tokyo 151 (JP)**

(72) Inventor: **SATO, Nobuyuki, 3-45, Chihaya-cho, Toshima--ku Tokyo 171 (JP)**

(74) Representative: **Fleuchaus, Leo, Dipl.-Ing. et al, Melchiorstrasse 42, D-8000 München 71 (DE)**

(54) **METHOD AND APPARATUS FOR SIMULTANEOUSLY DISPLAYING PLURALITY OF CHARACTERS AND GRAPHIC DATA ON MULTI-SCREEN DISPLAY ON TERMINAL SIDE IN COMMUNICATIONS SYSTEM.**

(57) In producing character and graphic data (picture data) of a predetermined size in a videotex network and in a variety of data communications systems, a method and an apparatus according to which unit picture data is divided into a plurality of data and is stored, as a picture data file, in a memory of a main computer of the data communications system, the picture data divided into a plurality of data are read by said computer from computers of devices of the terminal side, from a plurality of memories, and from a picture contraction/expansion control interface via a communication network, and partial pictures necessary for the memories are stored via the interface, and are simultaneously displayed as divided picture data on a multi-screen display.

0222920

SPECIFICATION

Title of the Invention

METHOD AND SYSTEM FOR SIMULTANEOUS REPRODUCTION OF SUBDIVIDED PORTIONS OF A VIDEO IMAGE

Field of the Invention

The present invention relates to a method and a system for reproducing subdivided portions of a video image separately and simultaneously on a plurality of display means in a communication system, such as videotex and so on.

Background of the Invention

It has not been possible in a conventional videotex system or data-communication system to realize a voluntary selection of any requisite subdivided portion of a video image, so as to permit display of the so subdivided portions separately on different display means. This can be achieved by the present invention.

Disclosure of the Invention

The present invention relates to a method and a system for reproducing any subdivided portion of a video image on display means in the terminal units of a communication system, such as videotex system and so on, including a host computer, a communication control circuit, transfer paths, such as, telephone cables and so on, and various terminal units, said method comprising processing a frame of video image including pictorial and/or graphic and/or literal patterns into blocks of image informations corresponding each to each subdivided portion of said frame of video image and representing each a predetermined standard image size, storing the so obtained image information blocks in a memory unit of the main computer of the communication system, reading out either one of said blocks of image informations from said memory of the main computer by means of a selection arrangement added on the terminal side of the

1

system, said selection arrangement consisting of a computer unit, a plurality of image information memories and a control interface for controlling enlargement or size reduction of the reproduced image, storing the so read out blocks of image informations into said plurality of image information memories and reproducing each requisite block of the image informations on a display means so as to permit simultaneous display of the selected subdivided portions of the video image separately on different display means. Upon the operation of image information input for a frame of video image, the image ionformations are stored in a memory unit of the main computer in the information center of the communication system under subdivision into blocks of image informations each corresponding to a predetermined standard size of video image frame, under identification of each block by affixing each identification block number etc.

<u>Brief Explanation of the Drawings appended</u>

Fig. 1 is a schematic diagram explaining the CAPTAIN (Character And Pattern Telephone Access Information Network) system, including a videotex communication network, an information center and terminal units as indicated.

Fig. 2 illustrates an example of image reproduction by the method according to the present invention, in which a video image of a butterfly is subdividedly displayed on four isolate display means as indicated by $2-_1$, $2-_2$, $2-_3$ and $2-_4$ corresponding to upper left, upper right, lower left and lower right part of one full frame of the video image.

Fig. 3 demonstrates an integration of the four displays as shown in Fig. 2 into one complete image of the butterfly by gethering the display means.

Fig. 4 shows another example of integrated display for a gold fish.

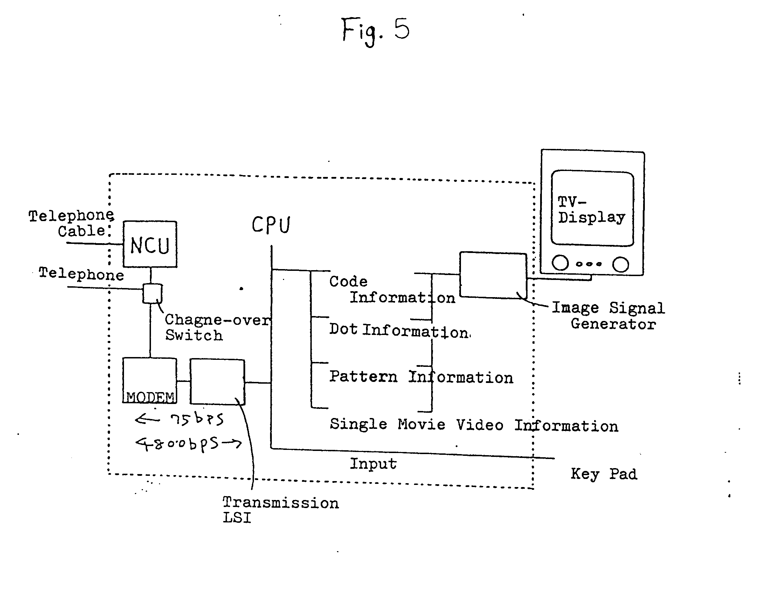

Fig. 5 is a schematic diagram explaining a typical users' terminal

2

0222920

unit of conventional system.

Fig. 6 is a block diagram showing the system according to the present invention in which the terminal unit includs a computer, control interface for controlling magnification and contraction of the size of image, a plurality of memory units for storing the image informations and a plurality of display means (four CRTs).

Figs. 7-1, 7-2 and 7-3 show three different examples of pictorial displays constituted of several display means each representing different image portion and integrated each into one composite image picture.

Description of Preferred Embodiment

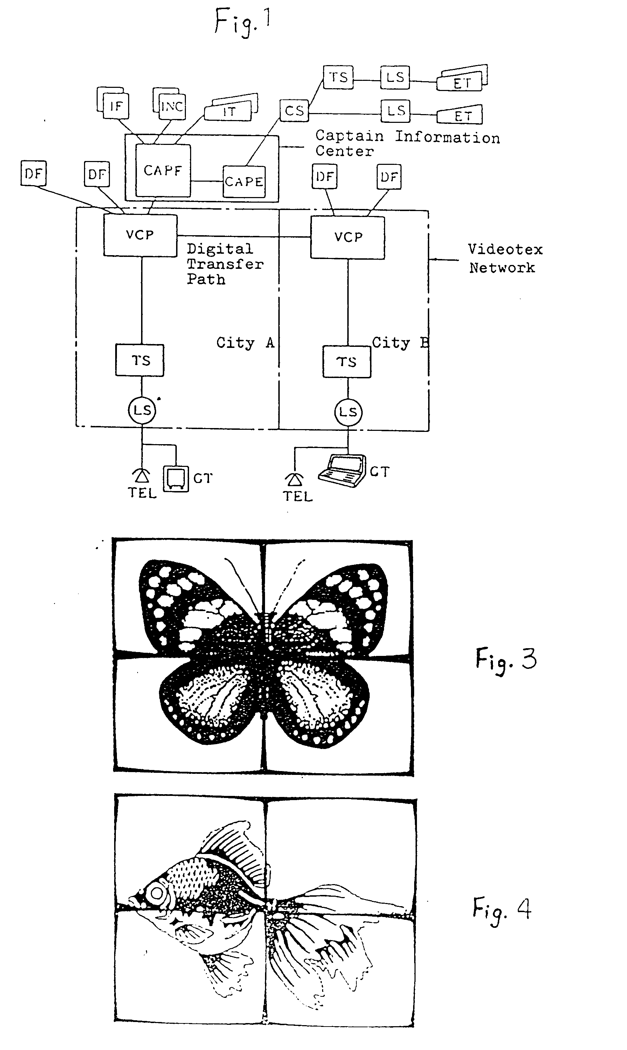

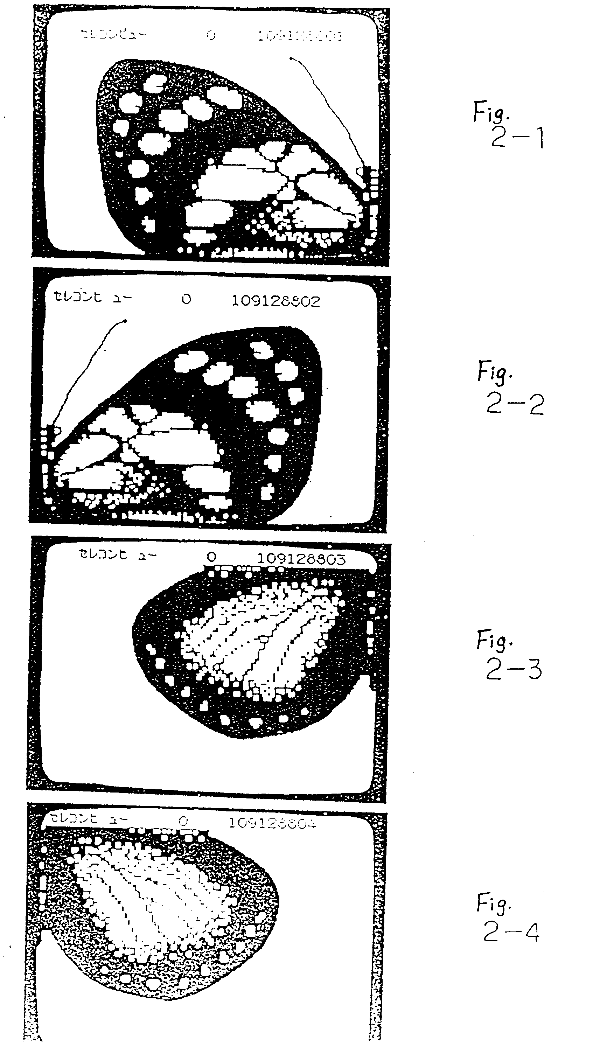

The system accofding to the present invention can be applied in a communication system, such as, CAPTAIN videotex system indicated in Fig. 1 by a block diagram, in which the literal denotations represent each as follows:

DF : Direct Information Center

TS : Tool Switching (trunk line switch-board)

LS : Local Switching (subscriber's line switch-board)

GT : Graphic Terminal (terminal device of videotex)

TEL : Telephone

CS : Center Switching (center junction switch-board)

CAPF : Captain Information Processing Unit

CAPE : Captain

VCP : Videotex Communication Processor

IT : Information Input Terminal

ET : Editing Terminal (simple editing information input terminal)

INC : Information Input Center

IF : Indirect Information Center

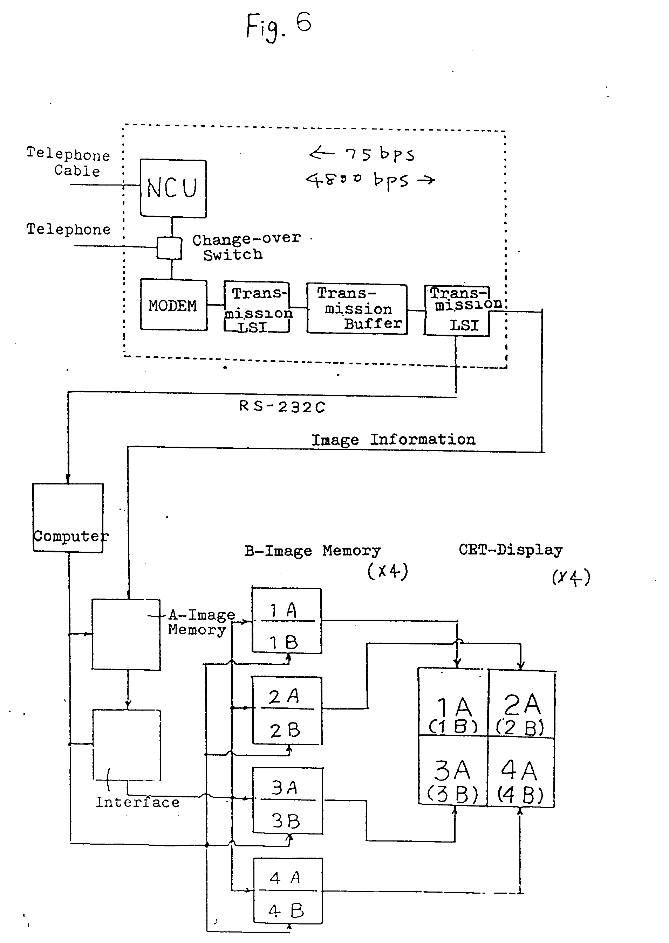

According to the present invention, the original video image is stored under subdivision into, for example, four image portions as

3

illustrated in Fig. 2, upon the image information input operation each in a form of a block of image informations, under affixing of an image identification number for each block of image informations into the memory of the main computer. As shown in Fig. 6, each of the so stored blocks of image informations is read out by means of a computer disposed on the user side (terminal side) through the communication system network as a separate block of image informations for the corresponding 1/4 image portions and is once stored in the A-image memory of Fig. 6.

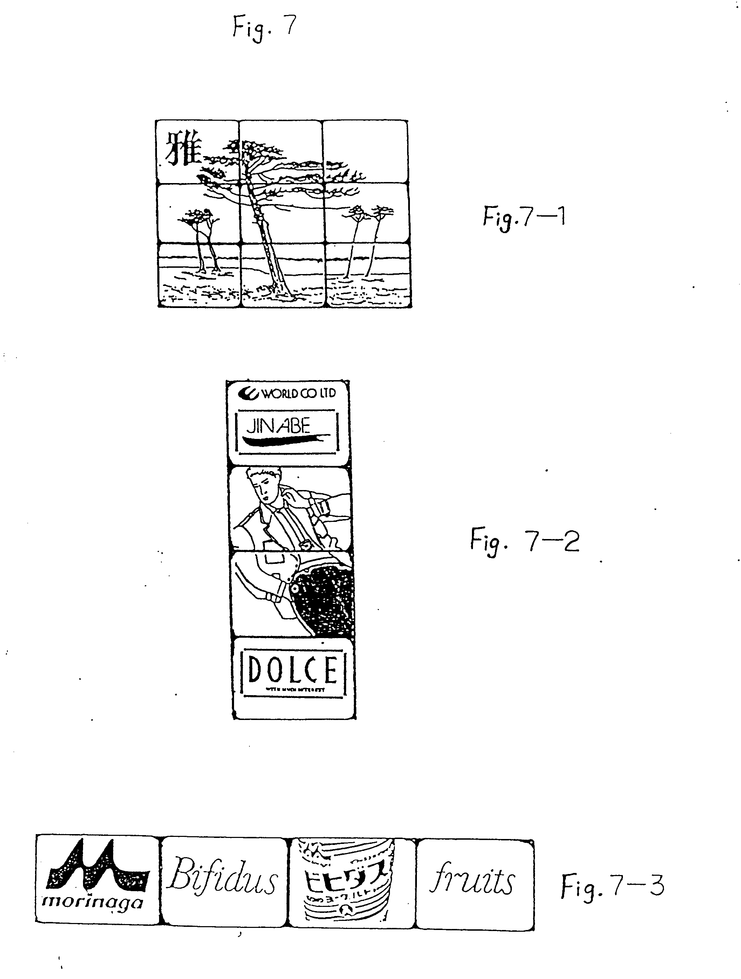

An identification affix "Sereconview 0 109128801" is found on the image field of 2-$_1$ of Fig. 2 at its upper portion. This affix is cut off from a 20 % enlarged image by passing the image information block through the interface (image size controlling interface) of Fig. 6, as shown in Fig. 3 (upper left display), and the resulting image is stored in the block memory 1A of the B-image memory of Fig. 6. In the same manner, the partial images 2-$_2$, 2-$_3$ and 2-$_4$ are also stored in the block memories 2A, 3A and 4A of the B-image memory. Every requisite block of image informations can be taken out as the corresponding image on either of specific CRT displays simultaneously. As illustrated in Figs. 7-1 to 7-3, a voluntary choice of every combination of the partial images is permitted on the terminal displays by the selection arrangement added to the user's terminal units according to the present invention. A similar example of combination display of goldfish is illustrated in Fig. 4, in which four partial images of goldfish are displayed each on each corresponding display unit simultaneously, so as to permit to integrate into a full image of the goldfish. It is furthermore possible to realize a timely variable image display in which, for example, the image displays of Figs. 3 nad 4 are alternately reproduced repeatedly or a display including a plurality of pictorial informations.

Field of Application in the Industry

4

The system according to the present invention for multiple image display through an image communication network permits not only to apply for every display installation but also to attain use of the information center thereof for a data base, since a quite large number of image informations are stored in the memory unit of the host computer. Marked effects can be achieved especially when it is utilized in the field of education, marketing P.R. and so on. The employment of larger display in education, communication, marketing P.R. etc. facilitates the effect of visual easiness. The invention proposes an advantage in the universal application in every field of industry.

5

What is claimed is:

1. A method for reproducing any subdivided portion of a video image on display means in the terminal units of a data communication system, such as videotex system or so on, including a host computer, a communication control circuit, transfer paths, such as, telephone cables and so on, and various terminal units, said method comprising processing a frame of video image including pictorial and/or graphic and/or literal patterns into blocks of image informations corresponding each to each subdivided part of said frame of video image and representing each a predetermined standard image size, storing the so obtained image information blocks in a memory unit of the main computer of the communication system, reading out either one of said blocks of image informations from said memory of the main computer by means of a selection arrangement added on the terminal side of the system, said selection arrangement consisting of a computer unit, a plurality of image information memories and a control interface for controlling enlargement or contraction of size of the reproduced image, storing the so read out blocks of image informations into said plurality of image information memories and reproducing each requisite block of image informations on a display means so as to permit simultaneous display of the selected subdivided portions of the video image separately on different display means.

2. A system for reproducing any subdivided portion of a video image on display means in the terminal units of a data communication system, such as, videotex system or so on, including a host computer, a communication control circuit, transfer paths, such as, telephone cables and so on, and various terminal units, comprising a selection arrangement added on the terminal side of the system, said selection arrangement consisting of a computer unit, a plurality of image information memories and a control interface for controlling enlargement or contraction of size of

6

the reproduced image, wherein the selection arrangement is assigned for reading out each block of image informations corresponding to a partial image stored in the main computer of the information center of the system, for storing the so read out block of image informations and for selectively reproducing requisite blocks of image informations on different display means each separately as a partial image.

**Fig. 1**

**Fig. 3**

**Fig. 4**

0222920

Fig. 2-1

Fig. 2-2

Fig. 2-3

Fig. 2-4

Fig. 5

Telephone Cable

NCU

Telephone

Chagne-over Switch

MODEM

← 75 bps

← 800 bps →

Transmission LSI

CPU

Code Information

Dot Information

Pattern Information

Single Movie Video Information

Input

Image Signal Generator

TV-Display

Key Pad

Fig. 6

0222920

0222920

Fig. 7

Fig.7—1

Fig. 7—2

Fig. 7—3

# INTERNATIONAL SEARCH REPORT

0222920

International Application No. PCT/JP86/00238

## I. CLASSIFICATION OF SUBJECT MATTER (if several classification symbols apply, indicate all) ³

According to International Patent Classification (IPC) or to both National Classification and IPC

Int.Cl⁴ H04N7/173, H04M11/06

## II. FIELDS SEARCHED

| Minimum Documentation Searched ⁴ | |
|---|---|
| Classification System | Classification Symbols |
| IPC | H04N7/00, 7/16, 7/173, H04M11/00, 11/06 |

| Documentation Searched other than Minimum Documentation to the Extent that such Documents are Included in the Fields Searched ⁵ |
|---|
| Jitsuyo Shinan Koho 1949 – 1985 |
| Kokai Jitsuyo Shinan Koho 1972 – 1985 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP, B2, 56-32823 (Nippon Telegraph & Telephone Kabushiki Kaisha) 30 July 1981 (30. 07. 81) (Family: none) | 1 – 2 |
| A | JP, A, 59-135496 (Tatsumi Denshi Kogyo Kabushiki Kaisha) 3 August 1984 (03. 08. 84) (Family: none) | 1 – 2 |
| A | JP, A, 59-137986 (Grigorio Holding B.V.) 8 August 1984 (08. 08. 84) (Family: none) | 1 – 2 |

* Special categories of cited documents: ¹⁵
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search ² | Date of Mailing of this International Search Report ³ |
|---|---|
| August 1, 1986 (01. 08. 86) | August 18, 1986 (18. 08. 86) |
| International Searching Authority ¹ | Signature of Authorized Officer ²⁶ |
| Japanese Patent Office | |

Form PCT/ISA/210 (second sheet) (October 1981)